# EUROPÄISCHE PATENTSCHRIFT

(11) **EP 2 836 355 B1**
(45) Veröffentlichungstag und Bekanntmachung des Hinweises auf die Patenterteilung: **04.10.2017**
(21) Anmeldenummer: 13717713.5
(22) Anmeldetag: 10.04.2013
(51) Int. Cl.: B29C 70/38, B29C 70/54, B29B 11/16, B29B 15/12

(54) **LEGEKOPF UND VORRICHTUNG ZUM AUFBAU EINES DREIDIMENSIONALEN VORFORMLINGS FÜR EIN BAUTEIL AUS EINEM FASERVERBUNDWERKSTOFF**
LAYING HEAD AND DEVICE FOR CONSTRUCTING A THREE-DIMENSIONAL PREFORM FOR A COMPONENT MADE OF A FIBRE COMPOSITE
TÊTE À DÉPOSER ET DISPOSITIF D'ÉLABORATION D'UNE ÉBAUCHE TRIDIMENSIONNELLE POUR UN ÉLÉMENT STRUCTURAL À PARTIR D'UN MATÉRIAU COMPOSITE RENFORCÉ PAR DES FIBRES

(30) Priorität: 13.04.2012 DE 102012007439
(43) Veröffentlichungstag der Anmeldung: 18.02.2015
(73) Patentinhaber: Compositence GmbH, 71229 Leonberg (DE)
(72) Erfinder: WITZEL, Volker, 74369 Löchgau (DE); KARB, Ingo, 71287 Weissach (DE)
(74) Vertreter: Kramer Barske Schmidtchen Patentanwälte PartG mbB
(86) Internationale Anmeldenummer: PCT/EP2013/001056
(87) Internationale Veröffentlichungsnummer: WO 2013/152853

(56) Entgegenhaltungen:
- EP-A1- 2 433 784
- EP-A2- 2 314 435
- DE-A1-102010 015 199

## Beschreibung

Die vorliegende Erfindung bezieht sich auf einen Legekopf und eine Vorrichtung zum Aufbau eines dreidimensionalen Vorformlings für ein Bauteil aus einem Faserverbundwerkstoff.

Ein Legekopf, eine Vorrichtung und ein Verfahren zum Aufbau eines dreidimensionalen Vorformlings für ein Bauteils aus einem Faserverbundwerkstoff sind aus der WO 2011/128110 A1 bekannt. Auf die Beschreibung des Standes der Technik und des technischen Hintergrunds auf den Seiten 1 bis 3 dieser Druckschrift wird Bezug genommen. In der Druckschrift wird gelehrt, wie eine Mehrzahl von trockenen Rovings einem Legekopf zur Ausbildung eines dreidimensionalen Vorformlings zugeführt und auf einem entsprechenden dreidimensionalen Werkstückträger abgelegt werden kann, um einen Bauteilvorformling für ein Bauteil aus Faserverbundwerkstoffen herzustellen.

Das Ausgangsmaterial sind dabei, wie in der vorliegenden Anmeldung, sogenannte Rovings. Ein Roving ist ein Faden, der aus einer Mehrzahl aus Filamenten aus dem Faserwerkstoff besteht, die man als die eigentlichen Fasern bezeichnen könnte. Für Faserverbundwerkstoffe werden bevorzugt Kohlenstofffasern, auch Karbonfasern genannt, Glasfasern, Aramidfasern, etc. verwendet. Ein solches Roving kann aus einigen wie zum Beispiel 8 oder 10 Filamenten bis zu einigen 10.000 oder mehr Filamenten bestehen. Ein 50k Roving besteht zum Beispiel aus 50.000 Filamenten.

In der vorliegenden Anmeldung bezeichnet der Begriff Faser ein Roving, außer wenn ausdrücklich auf einzelne Filamente Bezug genommen wird.

Die WO 2011/128110 A1 offenbart das Fixieren der Anfänge und Enden der Rovings am Rand des Werkstückträgers mittels Klebstoff.

Aus der WO 2009/077581 A2, der EP 2 433 784 A1, der WO 2009/158262 A1 und der US 2011/0083605 A1 sind weitere Vorrichtungen und Verfahren zum Anbringen oder Einbringen von Klebstoff auf bzw. in Rovings bekannt.

Die EP 2 433 784 A1 offenbart ein System zur automatisierten Lieferung und Ablage eines oder mehrerer, mit Harz getränkter Faserbänder auf einem Werkstückträger, das relativ zu dem Werkstückträger drehbar ist und bei dem trockene Faserbänder an einem Eingang zugeführt und nach Infusion von Harz in die Faserbänder unter Andrücken durch eine Druckrolle auf einem Werkstückträger abgelegt werden und mittels einer stromaufwärts der Druckrolle gelegenen Schneidevorrichtung geschnitten werden.

Aufgabe der vorliegenden Erfindung ist es, die Möglichkeiten der Fixierung der Rovings und die Möglichkeiten des Auftragens von Medien wie Klebstoff, Bindern, Imprägnierungsharzen und Ähnlichem zu verbessern.

Diese Aufgabe wird gelöst durch einen Legekopf nach Anspruch 1 bzw. eine Vorrichtung nach Anspruch 14.

Weiterbildungen sind in den abhängigen Ansprüchen angegeben.

Es wird insbesondere ermöglicht, mittels einer Düse ein Medium in die Rovings zu imprägnieren, das heißt, das Medium wie einen Klebstoff, einen Binder oder ein Harz nicht nur außen auf ein Roving aufzubringen, sondern das Roving mit dem Medium zu durchdringen.

Das ermöglicht ein verschnittarmes Fixeren der abzulegenden Faserschar bzw. Rovings im Fixierbereich des Werkstückträgers.

Die Prozessstabilität kann erhöht werden, da an den Enden des jeweiligen Rovings alle Filamente in Klebstoff/Binder/Harz eingebettet sind und dadurch nicht unvorhergesehen woandershin bewegt werden können.

In einer bevorzugten Ausführung können am Ende einer Legebahn die mit Klebstoff imprägnierten Abschnitte der Rovings derart mittig durchtrennt werden, dass gleichzeitig die Klebestelle für das Endfixieren der Rovings der aktuellen Legebahn und die Klebestelle für das Anfangsfixieren der folgenden Legebahn erhalten wird.

Weitere Merkmale und Zweckmäßigkeiten ergeben sich aus der Beschreibung von Ausführungsbeispielen anhand der Figuren. Von den Figuren zeigen:
- Fig. 1: in a) eine schematische Ansicht eines Roboters mit Legekopf, Rovingspulen und einem Werkstückträger, und in b) eine Ansicht des vorderen Endes des Roboters mit Legekopf beim Ablegen einer Faserschar auf dem Werkstückträger;
- Fig. 2: in a) eines Ansicht eines Werkstückträgers und in b), c) und d) mit abgelegten Faserlagen;
- Fig. 3: in a) eine perspektivische Ansicht eines Teils eines Legekopfs nach einer ersten Ausführungsform, und in b) eine Seitenansicht eines Teils des Legekopfs;
- Fig. 4: in a) eine schematische perspektivische Ansicht einer Düse nach einer Ausführungsform, in b) eine perspektivische schematische Ansicht eines hinteren Teils der Düse aus Fig. 4a), und in c) eine Vorderansicht des Teils aus Fig. 4b);
- Fig. 5: in a) eine Vorderansicht der Düse aus Fig. 4a), in b) eine Draufsicht auf die Düse aus Fig. 5a), und in c) oben eine Seitenansicht der Düse aus Fig. 5a) und unten eine vergrößerte Ansicht des oben gestrichelt umrahmten Teils; und
- Fig. 6: eine schematische Darstellung eines Schneidens eines imprägnierten Rovings, in a) vor dem Schneiden und in b) nach dem Schneiden.

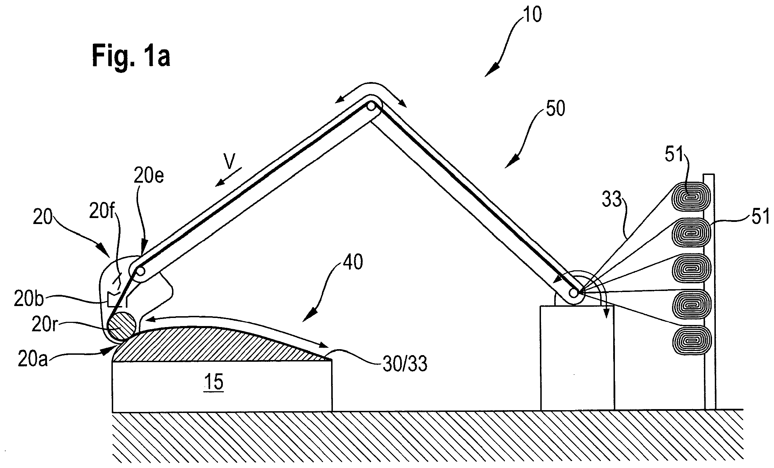

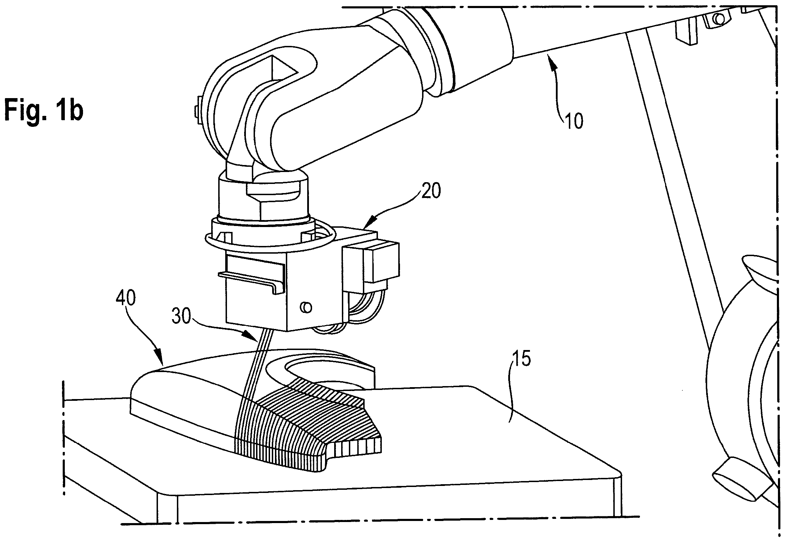

Die Fig. 1a und 1b zeigen schematisch einen Roboter 10, an dem ein Legekopf 20 befestigt ist. Ein Werkstückträger 40 ist auf einer Halterung 15 für den Werkstückträger gehalten. Es ist schematisch gezeigt, dass der Legekopf 20 zum gleichzeitigen Ablegen einer Faserschar 30 aus mehreren Rovings 33 auf dem Werkstückträger 40 ausgebildet ist. In Fig. 1a) sind 5 Spulen 51 eines Faserzuführungsmechanismus 50 gezeigt, auf dem die Fasern (Rovings) 33 aufgewickelt sind und von dort über den Faserzuführungsmechanismus 50 dem Legekopf 20 zugeführt werden. In Fig. 1b) sind nur 4 Rovings schematisch dargestellt. Die Faserschar 30 kann eine Mehrzahl n von Rovings aufweisen, mit n = 2, 3, ..., wobei momentan n = 8 oder n = 16 oder n = 32 bevorzugt wird.

Die Anordnung dient zum Aufbau eines dreidimensionalen Vorformlings für ein Bauteil aus einem Faserverbundwerkstoff mit einer mehrlagigen, multiaxialen Faserarchitektur (MAFA) ähnlich einem Multiaxialgelege (MAG).

Der Faserzuführungsmechanismus 50 weist bevorzugt einen Faserführungsmechanismus, der bevorzugt in der zu den Fig. 12, 13 der WO 2011/128110 A1 gezeigten und zu diesen Figuren beschriebenen Art ausgebildet ist, auf.

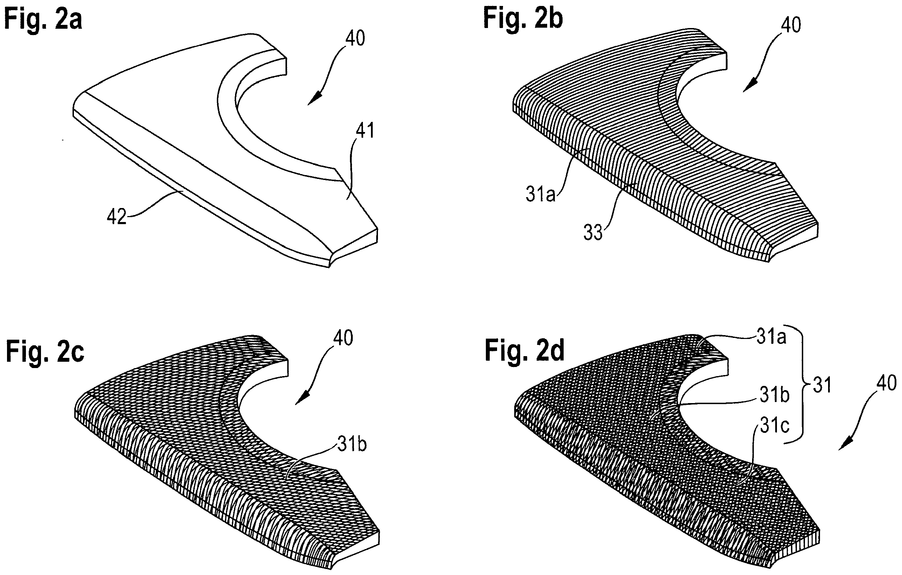

Nach einer Ausführungsform weist der Werkstückträger 40 einen Werkstückformbereich 41 und einen Randfixierbereich 42 auf, wie in Fig. 2a) gezeigt ist. Der Werkstückformbereich 41 entspricht der gewünschten dreidimensionalen Gestalt des Vorformlings. Der Randfixierbereich 42 dient zum Fixieren der Rovings 33 im Randbereich des Werkstückträgers 40.

In Fig. 2b) ist der Werkstückträger mit einer ersten Faserlage 31a, die auf dem Werkstückträger 40 in einer ersten Orientierung (= axialen Ausrichtung) abgelegt worden ist, gezeigt. Wie in Fig. 2b) angedeutet ist, besteht die Faserlage 31a aus Rovings 33, die in dieser axialen Ausrichtung abgelegt wurden. In Fig. 2c) ist derselbe Werkstückträger 40 gezeigt, auf dem eine zweite Faserlage 31b über der ersten Faserlage 31a abgelegt wurde. Die Fasern der zweiten Faserlage 31b haben eine Orientierung von - 45 Grad relativ zur Orientierung der ersten Faserlage 31a. In Fig. 2d) ist gezeigt, wie eine dritte Faserlage 31c über der zweiten Faserlage 31b abgelegt ist, wobei diese nur auf einem Teil des Werkstückträgers 40 abgelegt wurde. Die dritte Lage 31c hat eine Orientierung von + 45 Grad relativ zur ersten Lage und somit von 90 Grad relativ zur zweiten Lage 31b. Die drei Lagen 31a bis 31c bilden eine mehrlagige, multiaxiale Faserarchitektur (MAFA) 31.

Unter erneuter Bezugnahme auf Fig. 1a) ist zu erkennen, dass der Legekopf 20 einen Eingang 20e aufweist, über den die trockenen Rovings 33 dem Legekopf zugeführt werden. Der Legekopf 20 weist weiter einen Ausgang 20a auf, aus dem die Rovings 33 zum Ablegen auf dem Werkstückträger 40 ausgegeben werden, wobei an dem Ausgang 20a eine Anpressrolle 20r angeordnet ist, mittels derer die ausgegebenen Rovings 33 gegebenenfalls an den Werkstückträger 40 angedrückt werden können. In Fig. 1a) ist eine Faservorschubrichtung V für die Richtung der Förderung bzw. des Transports der Rovings 33 eingezeichnet. In der Faserschubrichtung V stromabwärts des Eingangs 20e des Legekopfs 20 ist eine Faserfördervorrichtung 20f vorgesehen. Diese Faserfördervorrichtung kann zum Beispiel mit einer Fördereinheit, wie sie in der US 2009/0229760 A1 beschrieben ist, verwirklicht werden. Grundsätzlich ist eine solche Faserförderung nach dem Eytelwein-Prinzip bekannt. In Bezug auf die Faserfördervorrichtung wird im Übrigen auf die genannten US 2009/0229760 A1 und die genannte WO 2011/128110 A1 verwiesen.

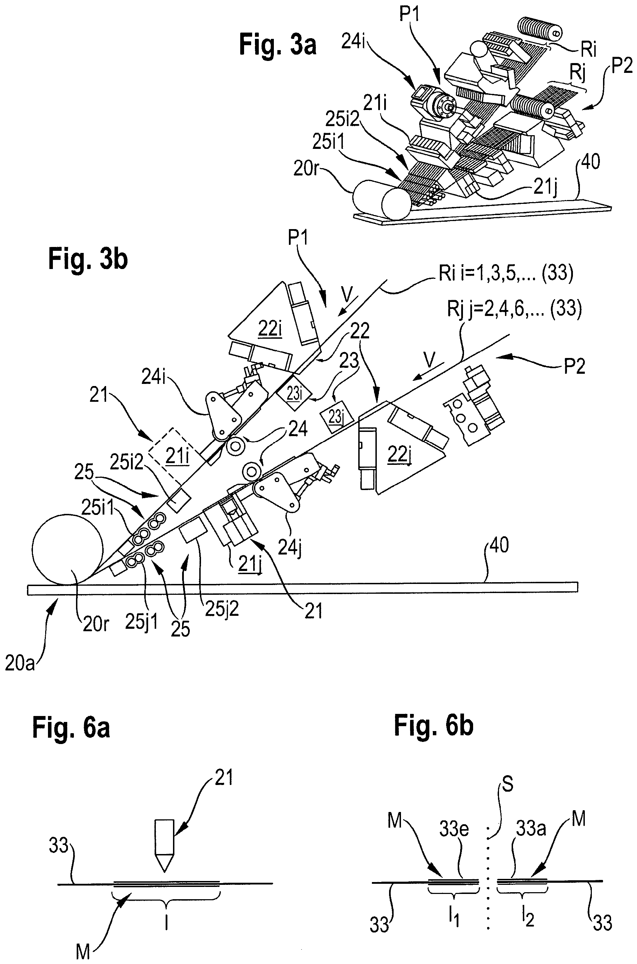

In Faservorschubrichtung V stromabwärts der Faserfördervorrichtung 20f ist in Fig. 1a) eine Faserbehandlungseinheit 20b schematisch dargestellt. Diese Faserbehandlungseinheit 20b wird nachfolgend unter Bezugnahme auf die Fig. 3a) und b) detaillierter beschrieben. In Fig. 3a) ist in perspektivischer Ansicht der Teil 20b des Legekopfs zur Führung und Behandlung der Rovings 33 bzw. Ri, Rj in Vorschubrichtung V stromabwärts der Faserfördervorrichtung 20f bis zu der Anpressrolle 20r gezeigt. In Fig. 3b) ist derselbe Abschnitt 20b des Innenlebens des Legekopfs 20 schematisch in einer Seitenansicht gezeigt. Die über den Eingang 20e in den Legekopf 20 eingeführten Rovings 33 werden bei der gezeigten Ausführungsform des Legekopfs in zwei Gruppen von Rovings Ri (i = 1, 3, 5, ...) und Rj (= 2, 4, 6, ...) aufgeteilt. Die Gruppe Ri enthält die geradzahlig nummerierten Rovings 33 und die Gruppe Rj enthält die ungradzahlig nummerierten Rovings 33. Bei dem gezeigten Ausführungsbeispiel ist n = 16, so dass 8 Rovings in der Gruppe Ri (i= 1, ... 15) und 8 Rovings in der Gruppe Rj (j = 2, ..., 16) vorhanden sind. Die Gruppen Ri und Rj werden auf 2 getrennten Pfaden P1 und P2 geführt und behandelt.

Die Aufteilung in die beiden Gruppen und die getrennten Pfade P1 und P2 ist nicht notwendig. Es könnte auch ein einzelner Pfad ohne Auftrennung vorhanden sein. Andererseits könnte auch eine Mehrzahl von mehr als zwei Gruppen und Pfaden implementiert werden.

Nachfolgend wird die Behandlungseinheit 20b für den Pfad P1 beschrieben. Die Beschreibung gilt analog für den Pfad P2. Die mit i versehenen Bezugszeichen des Pfads P1 haben für den Pfad P2 anstelle des i ein j.

Die Rovings 33, Ri werden von der Faserfördervorrichtung 20f in der Faservorschubrichtung V gefördert und gelangen stromabwärts zu einer Düse 22, 22i zum Auftragen und Einbringen eines Mediums M in die Rovings, die nachfolgend noch detaillierter beschrieben wird. Die Düse ist angepasst zum Aufbringen eines Mediums (Klebstoff, Binder, Harz, o. ä.) derart, dass das Medium beidseitig auf die Rovings aufgebracht und in die Rovings eingebracht (imprägniert) wird. Dieses beidseitige Aufbringen und Einbringen kann durchgehend oder getaktet abschnittsweise erfolgen.

Nachfolgend wird die entsprechende Beschreibung für den Fall gegeben, dass das Medium ein sogenannter Hot-Melt-Klebstoff ist. Ein solcher Hot-Melt-Klebstoff ist oberhalb einer vorbestimmten Temperatur klebrig und unterhalb der vorbestimmten Temperatur (nachfolgend Klebetemperatur genannt) nicht klebrig aber immer noch über einen signifikanten Temperaturbereicht elastisch.

Bei Verwendung eines solchen Hot-Melt-Klebstoffes ist es bevorzugt, dass in Vorschubrichtung V stromabwärts der Düse 22 eine Kühlvorrichtung 23, 23i zum Kühlen der Rovings mit dem auf- und eingebrachten Klebstoff unter die Klebetemperatur vorgesehen ist.

In der Behandlungseinheit 20b der in Fig. 3 gezeigten Ausführungsform ist bevorzugt in Vorschubrichtung V stromabwärts der Düse 22, bei Vorhandensein der Kühlvorrichtung 23 bevorzugt stromabwärts der Kühlvorrichtung 23, eine Zwischenfördervorrichtung 24, 24i vorgesehen. Die Zwischenfördervorrichtung dient zum sicheren Fördern der Rovings stromabwärts der Düse 22. Eine Faserschneidvorrichtung 21, 21i ist in Vorschubrichtung V stromabwärts der Düse 22, und bei Vorhandensein der Kühlvorrichtung 23 und/oder der Zwischenfördervorrichtung 24 bevorzugt stromabwärts dieser Vorrichtungen, vorgesehen. Die Faserschneidvorrichtung 21 ist angepasst zum Schneiden der Rovings. In Bezug auf konkrete Ausführungen der Faserschneidvorrichtung wird auf die Fig. 9 der WO 2011/128110 A1 und deren entsprechende Beschreibung verwiesen.

Wie bereits zuvor erläutert wurde, ist an dem Ausgang 20a des Legekopfs 20 eine Anpressrol-1e 20r angeordnet. In Vorschubrichtung V stromaufwärts der Anpressrolle 20r ist eine Heizvorrichtung 25, 25i1, 25i2 vorgesehen, die stromabwärts der Faserschneidvorrichtung 21, 21i vorgesehen ist. In der gezeigten Ausführungsform weist die Heizvorrichtung 25i zwei Elemente, die mit 25i1 und 25i2 bezeichnet sind, auf. Das in Vorschubrichtung V näher an der Anpressrolle 20r gelegene erste Element 25i1 ist eine Endaufheizung, die dazu dient, den auf-und in die Rovings 33, Ri eingebrachten Klebstoff wieder über die Klebetemperatur (z. B. 100° C) aufzuheizen. Das zweite Element 25i2 ist eine Heizung zum Erhalten einer vorbestimmten Temperatur (z. B. 70° C) der Rovings (Temperaturhalteheizung).

Wenn die Rovings 33, Ri von der Faserschneidvorrichtung 22, 22i geschnitten worden sind, so kann das stromaufwärts der Schnittebene liegende Ende des Rovings 33, Ri Klebstoff aufweisen. Damit dieser Klebstoff nicht zu weit unter die Klebetemperatur abkühlt, kann dieser Teil des Rovings auf einer Temperatur unterhalb aber nahe der Klebetemperatur durch die - Temperaturhalteheizung 25i2 gehalten werden.

Der Legekopf 20 und der Roboter 10 sowie die einzelnen Bestandteile des Legekopfs 20 werden von einer nicht gezeigten Steuervorrichtung gesteuert.

Der Werkstückträger 40 ist in Fig. 3 als ebener Werkstückträger gezeigt. Das dient lediglich der Vereinfachung der Darstellung.

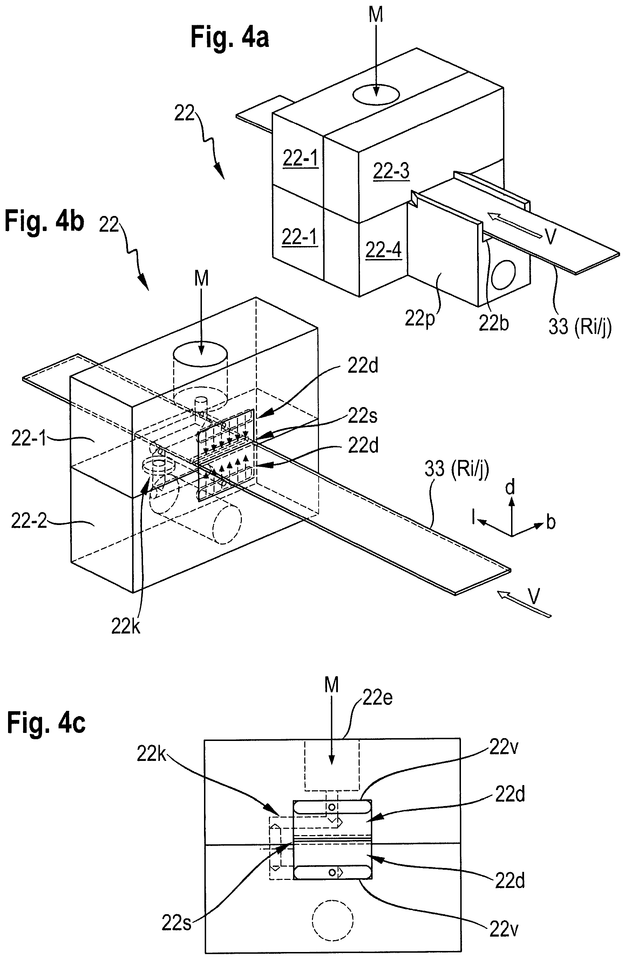

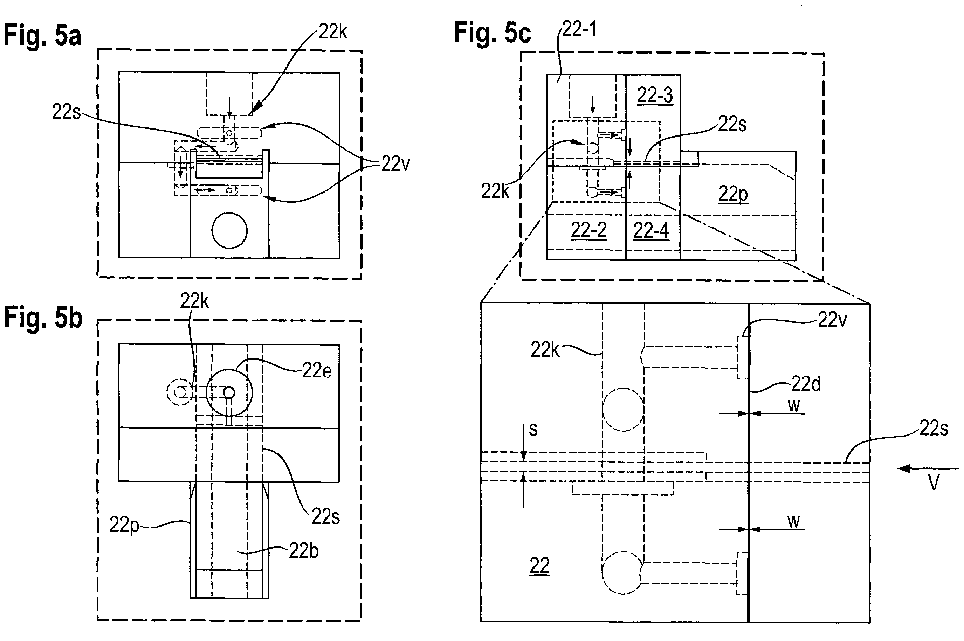

Nachfolgend wird unter Bezugnahme auf die Fig. 4 und 5 die Gestaltung der Düse 22, 22i, 22j detaillierter beschrieben.

In Fig. 4a) ist eine perspektivische Ansicht in der Düse 22 in schematischer Darstellung gezeigt. Ein Roving 33 wird in der Vorschubrichtung V über eine auf einem Vorsprung 22P ausgebildete Führungsbahn 22b in die Düse 22 zugeführt, die in der gezeigten Ausführungform eben ist. Über eine an der Oberseite vorgesehene Öffnung wird das Medium (z. B. Klebstoff) M zugeführt. In Fig. 4a) ist der Körper der Düse 22 stromabwärts des Vorsprungs als aus vier Teilen 22-1 bis 22-4 bestehend dargestellt, die miteinander verschraubt (nicht dargestellt) sind. Das ist auch in der Seitenansicht aus Fig. 5c) gut zu erkennen. In Fig. 4b) und c) ist lediglich der hintere Teil dargestellt. Zur Beschreibung der Ausbildung der Düse 22 und der Anpassung an die Durchführung des Rovings 33 wird ein Koordinatensystem 1-d-b eingeführt, bei dem die Achse 1 in Längsrichtung des Rovings 33, die der Vorschubrichtung V entspricht, zeigt, die Richtung d in Richtung der Dicke des Rovings und die Richtung b in Richtung der Breite des Rovings zeigt. Wie in den Fig. 4b), c) und 5a) bis c) gut zu erkennen ist, weist die Düse 22 einen Schlitz 22s auf, der in Höhe und Breite an die Abmessungen des durchzuführenden Rovings 33 angepasst ist. Die Höhe s in Richtung d des Schlitzes entspricht dabei der Höhe des Rovings 33 mit einem vorbestimmten Aufmass. Der Schlitz 22s erstreckt sich also in einer Schlitzebene 1-b mit einer Höhe s in der zu der Schlitzebene 1-b senkrechten Dickenrichtung d. Die Bestimmung des Aufmasses wird nachfolgend noch erläutert. Die nicht mit einem Bezugszeichen versehene Breite des Schlitzes 22s entspricht der Breite des Rovings mit einem ebenfalls vorbestimmten Aufmass.

Die Düse weist ein Kanalsystem 22k auf, das zwei Verteiler 22v mit dem über dem Eingang 22e zugeführten Medium M versorgt. Im Falle des Hot-Melt-Klebstoffs wird dieser über den Eingang 22e mit einem Druck von zum Beispiel 50 bar zugeführt.

In der Düse 22 ist je ein Verteiler 22v oberhalb und unterhalb des Durchführungsschlitzes 22s angeordnet. Von dem oberhalb des Durchführungsschlitzes 22s gelegenen Verteiler 22v führt ein als Düsenspalt 22d ausgebildeter Klebstoffaufträger zu dem Durchführungsschlitz. Der Düsenspalt 22d weist bevorzugt die Breite des Schlitzes 22s auf. In gleicher Weise führt ein als Düsenspalt 22d ausgebildeter Klebstoffaufträger von dem unterhalb des Durchführungsschlitzes 22s gelegenen Verteilers 22v zu demselben.

Bei entsprechender Zuführung des Mediums M wird dieses also über die Düsenspalte 22d auf die Oberseite und die Unterseite eines durchgeführten Rovings 33 aufgetragen. Durch die Bewegung des Rovings in Vorschubrichtung V kann dieses, abhängig von der gesteuerten Zufuhr, abschnittsweise oder getaktet oder durchgehend aufgetragen werden.

Damit der Klebstoff nicht nur auf das Roving aufgetragen, sondern in das Roving imprägniert wird, ist der Durchgangsschlitz 22s, abhängig von den Abmessungen des Rovings und der Natur des Klebstoffes oder anderen Mediums sowie dem Versorgungsdruck, in seinen Abmessungen angepasst.

Dadurch wird eine Imprägnierung ohne Umlenkung der Rovings senkrecht zur Vorschubrichtung V ermöglicht. Weiterhin wird ermöglicht, den Klebstoffauftrag definiert zu stoppen. Eine Unterbrechung der Klebstoffzufuhr durch Schließen eines Ventils führt zum Verlust des Drucks und damit zum abrupten Ende des Auftrags.

Für einen üblichen Hot-Melt-Klebstoff mit einer Klebetemperatur von ca. 150° C und einem Versorgungsdruck von ca. 50 bar kann bei einem 50k-Roving mit 12 mm Breite und einer Dicke von ca. 0,3 mm bis 0,35 mm ein Aufmass von 0,05 bis 0,1 mm gewählt werden, um den Hot-Melt-Klebstoff nicht nur auf das Roving aufzubringen, sondern auch in das Roving einzubringen, also dieses zu imprägnieren. In einem solchen Fall beträgt die Höhe des Schlitzes 22s also z. B. 0,4 mm. Die lichte Weite w des Spalts 22d liegt dann im Bereich von 0,025 bis 1 mm, beträgt also z. B. 0,05 mm.

Unterstützende Maßnahmen wie ein leichtes Kämmen des Rovings direkt vor der Mediumzufuhr oder Ähnliches sind zur Unterstützung möglich (siehe auch die in der WO 2011/128110 A1 beschriebene Faseraufbereitung). Allgemein soll das Aufmass im Bereich von 0,025 bis - 0,2 mm in Höhenrichtung d und/oder Breitenrichtung b liegen, für Rovings mit Breiten im Bereich von 5 bis 100 mm und Dicken im Bereich von 0,2 bis 0,6 mm.

Für eine Roving und Medien-Kombination, bei der das Imprägnieren leicht ist, kann ein einzelner Durchführungsschlitz für alle oder mehrere Rovings eines Zufuhrpfades P1, P2 vorgesehen werden. Zu bevorzugen ist es allerdings, pro einzelnem Roving einen separaten Durchführungsspalt 22s vorzusehen.

Als Medien kommen insbesondere Klebstoffe, die für die Anfangs- und Endfixierung der Faserlagen 31a, b, c oder deren Zwischenfixierung geeignet sind, wie zum Beispiel Klebstoffe auf EVA oder Polyolefin oder Epoxid-Basis in Frage. Als Medien kommen auch Binder und Harze in Frage. Binder werden dabei dazu verwendet, die trockenen Rovings beim Ablegen mit Binder zu beaufschlagen, um eine handhabbare, trockene (d.h. kein Harz beinhaltende) Preform zu erhalten und ein Verrutschen der Fasern während der Preformfertigung zu vermeiden. Das Aufbringen und Einbringen von Harz kann dazu genutzt werden, dass das Harz nicht in eine dem Ausbilden des Preforms nachgelagerten Prozess in das Perform eingebracht werden muss, sondern die Imprägnierung mit Harz direkt bei Ablegen der Fasern geschieht (Online-Prepregging). Sollen mehrere Medien angewandt werden, kann für jedes Medium eine eigene Düse 22 in jedem Pfad P1, P2 vorgesehen werden.

Im Hinblick auf die Binder und das Harz ist darauf hinzuweisen, dass das Aufbringen in dem Legekopf 20 insbesondere mit der beschriebenen Düse 22, das Handhaben trockener Rovings von der Spule bis stromabwärts der Faserfördervorrichtung im Legekopf 20 und damit hohe Geschwindigkeiten etc. ermöglicht.

Der beschriebene Legekopf bzw. eine Vorrichtung zum Aufbau eines dreidimensionalen Vorformlings für ein Bauteil aus einem Faserverbundwerkstoff mit einem solchen Legekopf kann also mit einem Verfahren der in der WO 2011/12810 A1 beschriebenen Art, in sehr vorteilhafter Weise verwendet werden und dieses fortbilden.

Es wird insbesondere eine Fortbildung eines Verfahrens zum Aufbau eines Vorformlings für ein Bauteil aus einem Faserverbundwerkstoff ermöglicht, bei dem die Fixierung der Endabschnitte von Rovings beidseitig eines Schnitts in besonders vorteilhafter Weise bewerkstelligt werden kann.

Dies wird anhand eines Falles, bei dem trockene Rovings auf dem Werkstückträger 40 abgelegt werden erläutert. Ein Roving 33 wird, wie in Fig. 6a) zu erkennen ist, über eine vorbestimmte Länge 1 mit dem Medium M, das hier ein Hot-Melt-Klebstoff ist, beschichtet und eventuell imprägniert. Die Länge 1, die in Fig. 6a) gezeigt ist, beinhaltet mindestens die vorbestimmen Längen 11 und 12, die in Fig. 6b) gezeigt sind, das heißt 1 ≥ 11 + 12. Das Roving 33 wird von der Faserschneidvorrichtung 21 an einer Stelle geschnitten, die so bestimmt ist, dass nach dem Ausführen des Schnitts entlang der Schnittebene S das Ende 33e am Ende einer Legebahn in dem Randfixierbereich mit dem Klebstoff M über die erste vorbestimmte Länge 11 fixiert werden kann. Auf der anderen Seite des Schnitts S ist an dem stromabwärts vorderen Ende des verbleibenden Teils des Rovings 33 der Klebstoff M mit der zweiten vorbestimmten Länge 12 vorhanden, mit dem das Roving 33 beim Beginn des Ablegens der nächsten Legebahn an dem Werkstückträger 40 fixiert werden kann.

Das ist grundsätzlich nicht auf eine Randfixierung beschränkt, sondern kann analog auch beim Aufbringen von Zwischenverstärkungen o. ä. angewandt werden.

Die Düsenspalten enden bei der beschriebenen Ausführungsform relativ zu der Vorschubrichtung auf einer Linie. Sie können alternativ auch in Vorschubrichtung V versetzt sein. Die Düsenspalte ist bevorzugt linear ausgebildet. Alternativ sind auch linear oder in einer Matrix angeordnete Löcher als Ausgang des Medienaufträgers 22d möglich. Die stromabwärts gelegene Lippe des Düsenspalts 22d kann in dem Schlitz 22s vorspringend ausgebildet sein, um ein Abziehen (Rakeln) zu bewirken.

Die Gestaltung der Düse 22 mit den 4 Teilen 22-1 bis 22-4 ermöglichst es, die Düsenspalte 22d und den Schlitz 22s an Stirnflächen der 4 Teile vorzusehen, was eine einfache Herstellung erlaubt.

Es wird ausdrücklich betont, dass die einzelnen Elemente und Verfahrensschritte, die beschrieben wurden, auch separat als eigenständige Gegenstände offenbart werden. So ist zum Beispiel die Gestaltung der Düse 22 unabhängig von der genauen Gestaltung des Legekopfs oder dem Einbau in einem Legekopf. Das zu Fig. 6 beschriebene Verfahren kann grundsätzlich auch ohne den Legekopf und/oder die beschriebene Düse implementiert werden Analoges gilt für die anderen beschriebenen Elemente und Verfahrensschritte wie die Heizvorrichtung, die Kühlvorrichtung, die Aufteilung in Pfade etc..

In der oben beschriebenen Ausführungsform wurde das Medium wie z. B. der Klebstoff beidseitig auf die Rovings auf- und eingebracht. Die Konstruktion der Düse war entsprechend angepasst. Es ist alternativ möglich, ein Auf- und Einbringen des Mediums auf und in die Rovings 33 mit einer einseitigen Medienzuführung zu erzielen, wie nachfolgend beschrieben wird. Die bisherigen Ansätze des Aufbringens von Medien wie Klebstoff, Binder, Harz haben im Wesentlichen eine Art kontaktloses oder druckloses Aufbringen gelehrt. Die oben beschriebene Düse führt dazu, dass das Medium nicht nur in Kontakt mit den Rovings gebracht wird, sondern in das Roving eingepresst wird. Das lässt sich auch bei einer einseitigen Medienzuführung, also falls z. B nur die obere Düse 22d in den Fig. 4, 5 vorhanden ist, erzielen, falls das Medium trotzdem unter Druck in das Roving eingepresst wird. Diese wird erzielt, in dem eine Art Gegenlager auf der anderen Seite des Rovings vorhanden ist, also die Gegenseite des Durchführungsschlitzes 22s, so dass das Medium unter Druck in das Roving eingepresst wird. Zur Förderung der Imprägnierung insbesondere bei einer einseitigen Medienzuführung ist es zu bevorzugen, das Flächengewicht des Rovings zu erniedrigen. Das kann z. B. durch Kämmen, Aufspreizen oder andere bekannte Maßnahmen zum Erniedrigen des Flächengewichts erfolgen. Ein einseitiges bzw. beidseitiges Aufbringen bezieht sich in der vorliegenden Anmeldung auf die Breitseiten des Rovings, also die Seiten, die sich in der Ebene 1-b in Fig. 4b) erstrecken.

Es wird ausdrücklich erklärt, dass alle Merkmale die in der Beschreibung und/oder den Ansprüchen offenbart sind, dazu gedacht sind, getrennt und unabhängig voneinander zum Zwecke der ursprünglichen Offenbarung und ebenso zum Zwecke des Beschränkens der beanspruchten Erfindung, unabhängig von der Zusammenstellung der Merkmale in den Ausführungsformen und/oder den Ansprüchen, offenbart zu werden. Es wird ausdrücklich erklärt, dass alle Wertebereiche oder Angaben von Gruppen von Gesamtheiten jeden möglichen Zwischenwert und jede Zwischengesamtheit zum Zwecke der ursprünglichen Offenbarung und ebenso zum Zwecke des Beschränkens der beanspruchten Erfindung offenbaren.

## Patentansprüche

1. Legekopf für die Herstellung von Fasergelegen und Bauteilvorformlingen aus Fasern, mit
einem Eingang (20e), der zum Einführen einer Mehrzahl von trockenen Rovings (33; R1, R2, ...) angepasst ist,
einer Faserfördervorrichtung (20f) zum gleichzeitigen und voneinander unabhängigen Fördern von über den Eingang (20e) eingeführten Rovings (33; R1, R2, ...) in einer Faservorschubrichtung (V),
einem Ausgang (20a), der in Faservorschubrichtung (V) stromabwärts der Faserfördervorrichtung (20f) angeordnet ist und zum gleichzeitigen Ablegen einer Mehrzahl von Rovings (33; R1, R2, ...) auf einem Werkstückträger (40) zum Aufbau eines dreidimensionalen Vorformlings (31) angepasst ist,
einer Faserschneidvorrichtung (21, 21i, 21j), die in Faservorschubrichtung (V) stromabwärts der Faserfördervorrichtung (20f) und stromaufwärts des Ausgangs (20a) angeordnet ist und zum Schneiden der Rovings (33; R1, R2, ...) angepasst ist, und
einer Düse (22, 22i, 22j) zum Aufbringen eines Mediums auf die Rovings (33; R1, R2, ...), bei dem die Düse (22, 22i, 22j) zum Aufbringen des Mediums auf die Rovings (33; R1, R2, ...) und zum Einbringen des Mediums in die Rovings (33; R1, R2, ...) dadurch angepasst ist, dass die Düse einen schlitzförmigen Durchgangsspalt (22s) aufweist, der sich in einer Schlitzebene (1-b) erstreckt und in einer Dickenrichtung (d), die senkrecht zu der Schlitzebene (1-b) ist, eine Höhe (s), die der Höhe eines trockenen Rovings (33; R1, R2, ...) in Dickenrichtung (d) plus einem geringen Aufmaß, das so gewählt ist, dass ein Imprägnierungsdruck zum Drücken des Mediums in das Roving erzeugt wird, aufweist.

2. Legekopf nach Anspruch 1, bei dem die Düse (22, 22i, 22j) in Vorschubrichtung (V) stromabwärts der Faserfördervorrichtung (20f) angeordnet ist.

3. Legekopf nach Anspruch 1 oder 2, bei dem die Düse (22, 22i, 22j) in Vorschubrichtung (V) stromaufwärts der Faserschneidvorrichtung (21, 21i, 21j) angeordnet ist.

4. Legekopf nach einem der Ansprüche 1 bis 3, bei dem
die Rovings (33; R1, R2, ...) in die Düse (22) über eine Führungsbahn (22b) geführt werden.

5. Legekopf nach einem der Ansprüche 1 bis 4, bei dem
die Düse (22, 22i, 22j) für jedes Roving aus der Mehrzahl der Rovings (33; R1, R2, ...) einen schlitzförmigen Durchgangsspalt (22s) aufweist.

6. Legekopf nach einer der Ansprüche 1 bis 5, bei dem
eine Anpressrolle (20r) an dem Ausgang (20a) angeordnet ist.

7. Legekopf nach einer der Ansprüche 1 bis 6, bei dem
eine Heizvorrichtung (25, 25i1, 25i2, 25j1, 25j2) in Vorschubrichtung (V) stromabwärts der Faserschneidvorrichtung (21, 21i, 21j) angeordnet ist.

8. Legekopf nach einer der Ansprüche 1 bis 7, bei dem
eine Kühlvorrichtung (23, 23i, 23j) in Vorschubrichtung (V) stromabwärts der Düse (22, 22i, 22j) und stromaufwärts der Schneidvorrichtung (21, 21i, 21j) angeordnet ist.

9. Legekopf nach einer der Ansprüche 1 bis 8, bei dem
eine Zwischenfördervorrichtung (24, 24i, 24j) in Vorschubrichtung (V) stromabwärts der Düse (22, 22i, 22j) angeordnet ist.

10. Legekopf nach einem der Ansprüche 1 bis 9, bei dem die Düse (22, 22i, 22j) zum beidseitigen Aufbringen und Einbringen des Mediums auf/in die Rovings angepasst ist.

11. Legekopf nach einer der Ansprüche 7 bis 10, bei dem
die Heizvorrichtung eine Endheizung (25i1, 25j1) zum Wiederaufheizen des Mediums, das auf die Rovings (33; R1, R2, ...) aufgebracht und in die Rovings eingebracht ist, aufweist, die in Vorschubrichtung (V) stromaufwärts und benachbart zu der Anpressrolle (20r) angeordnet ist.

12. Legekopf nach einem der Ansprüche 1 bis 11, bei dem
eine Mehrzahl von Vorschubpfaden (P1, P2) für die Mehrzahl von trockenen Rovings (33), - die durch den Eingang (20e) eingeführt werden, derart vorgesehen ist, dass die trockenen Rovings in Gruppen (Ri, Rj) aufgeteilt werden und für jede der Gruppen, die dem Ausgang (20a) über die separaten Vorschubpfade (P1, P2) zugeführt werden, jeweils eine entsprechende Düse (22i, 22j), Schneidvorrichtung (21i, 21j) und optional eine entsprechende Kühlvorrichtung (23i, 23j), Zwischenfördervorrichtung (24i, 24j) bzw. Heizvorrichtung (25i1, 25i2, 25j1, 25j2) vorgesehen sind.

13. Legekopf nach einem der Ansprüche 1 bis 12, bei dem
die Düse (22, 22i, 22j) dazu angepasst ist, ein Medium, das ausgewählt ist aus einem Klebstoff zum Fixieren der Rovings, einem Binder zum Verbinden der Rovings, und einem Harz zum Imprägnieren des Rovings, angepasst ist.

14. Vorrichtung zum Aufbau eines Vorformlings (31) für ein Bauteil aus einem Faserverbundwerkstoff, mit
einem Werkstückträger (40),
einem Legekopf (20) nach einem der Ansprüche 1 bis 13 zum Ablegen einer Faserschar (30) aus Rovings (33) auf dem Werkstückträger (40), und
einer Transfervorrichtung zum Übertragen des Vorformlings (31) von dem Werkstückträger (40) zu einem nächsten Herstellungsschritt.

## Claims

1. Laying head for manufacturing of fiber layers and structural component preforms from fibers, comprising
an inlet (20e) adapted for introducing a plurality of dry rovings (33; R1, R2...),
a fiber conveying device (20f) for simultaneous and mutually independent conveying of rovings (33; R1, R2...) introduced via the inlet (20e) in a fiber supply direction (V),
an outlet (20a) arranged downstream in the fiber supply direction (V) of the fiber conveying device (20f) and adapted for simultaneous laying of a plurality of rovings (33; R1, R2...) on a workpiece carrier (40) for forming a three-dimensional preform (31),
a fiber-cutting device (21, 21i, 21j) provided downstream in the fiber supply direction (V) of the fiber conveying device (20f) and upstream of the outlet (20a) and adapted for cutting the rovings (33; R1, R2...), and
a nozzle (22, 22i, 22j) for applying a medium onto the rovings (33; R1, R2...),
wherein the nozzle (22, 22i, 22j) is adapted for applying the medium onto the rovings (33; R1, R2...) and for introducing the medium into the rovings (33; R1, R2...) in that the nozzle comprises a slit-shaped passing-through gap (22s) extending in a slit plane (1-b) and having, in a thickness direction (d) perpendicular to the slit plane (1-b), a height (s) corresponding to the height of a dry roving (33; R1, R2...) in thickness direction (d) plus a small overmeasure selected such that an impregnation pressure for pressing the medium into the roving is generated.

2. Laying head according to claim 1, wherein the nozzle (22, 22i, 22j) is arranged downstream in supply direction (V) of the fiber conveying device (20f).

3. Laying head according to claim 1 or 2, wherein the nozzle (22, 22i, 22j) is arranged upstream in supply direction (V) of the fiber cutting device (21, 21i, 21j).

4. Laying head according to one of claims 1 to 3, wherein
the rovings (33; R1, R2...) are guided into the nozzle (22) via a guiding path (22b).

5. Laying head according to one of claims 1 to 4, wherein
the nozzle (22, 22i, 22j) comprises a slit-shaped passing-through gap (22s) for each roving of the plurality of rovings (33; R1, R2...).

6. Laying head according to one of claims 1 to 5, wherein
a pressing roller (20r) is arranged at the outlet (20a).

7. Laying head according to claims 1 to 6, wherein
a heating device (25, 25i1, 25i2, 25j1, 25j2) is arranged downstream in supply direction (V) of the fiber-cutting device (21, 21i, 21j).

8. Laying head according to one of claims 1 to 7, wherein
a cooling device (23, 23i, 23j) is arranged downstream in supply direction (V) of the nozzle (22, 22i, 22j) and upstream of the cutting device (21, 21i, 21j).

9. Laying head according to one of claims 1 to 8, wherein
an intermediate conveying device (24, 24i, 24j) is arranged downstream in supply direction (V) of the nozzle (22, 22i, 22j).

10. Laying head according to one of claims 1 to 9, wherein
the nozzle (22, 22i, 22j) is adapted for a two-sided application and introduction of the medium onto/into the rovings.

11. Laying head according to one of claims 7 to 10, wherein
the heating device comprises an end heating (25i1, 25j1) for reheating the medium that has been applied onto the rovings (33; R1, R2...) and introduced into the rovings, which is arranged upstream in supply direction (V) of and adjacent to the pressing roller (20r).

12. Laying head according to one of claims 1 to 11, wherein
a plurality of supply paths (P1, P2) for the plurality of dry rovings (33), which are introduced through the inlet (20e), is provided in a manner such that the dry rovings are divided in groups (Ri, Rj), and that there are respectively provided for each of the groups, which are supplied to the outlet (20a) via the separate supply paths (P1, P2), a corresponding nozzle (22i, 22j), cutting device (21i, 21j) and optionally a corresponding cooling device (23i, 23j), intermediate conveying device (24i, 24j) and a heating device (25i1, 25i2, 25j1, 25j2), respectively.

13. Laying head according to one of claims 1 to 12, wherein
the nozzle (22, 22i, 22j) is adapted to a medium, that is selected from an adhesive for fixing the rovings, a binder for connecting the rovings, and a resin for impregnating the rovings.

14. Apparatus for forming a preform (31) for a structural member made of a fiber composite material, comprising
a workpiece carrier (40),
a laying head (20) according to one of claims 1 to 13 for laying a fiber set (30) of rovings (33) on the workpiece carrier (40), and
a transfer device for transferring the preform (31) from the workpiece carrier (40) to a subsequent manufacturing step.

## Revendications

1. Tête à déposer pour la fabrication de matelas de fibres et d'ébauches d'élément structural à partir de fibres, avec
une entrée (20e), qui est adaptée pour l'introduction d'une pluralité de rovings secs (33 ; R1, R2, ...),
un dispositif de transport de fibres (20f) pour le transport simultané et indépendant l'un de l'autre de rovings (33 ; R1, R2, ...) introduits via l'entrée (20e) dans une direction d'avance des fibres (V).
une sortie (20a), qui est agencée dans la direction d'avance des fibres (V) en aval du dispositif de transport de fibres (20f) et adaptée pour le dépôt simultané d'une pluralité de rovings (33 ; R1, R2, ...) sur un porte-pièce (40) pour l'élaboration d'une ébauche tridimensionnelle (31),
un dispositif de coupe de fibres (21, 21i, 21j), qui est agencé dans la direction d'avance des fibres (V) en aval du dispositif de transport de fibres (20f) et en amont de la sortie (20a) et adapté pour la coupe des rovings (33 ; R1, R2, ...), et
une buse (22, 22i, 22j) pour l'application d'un milieu sur les rovings (33 ; R1, R2, ...),
dans laquelle la buse (22, 22i, 22j) est adaptée pour l'application du milieu sur les rovings (33 ; R1, R2, ...) et pour l'introduction du milieu dans les rovings (33 ; R1, R2, ...) par le fait que la buse présente un interstice de passage en forme de fente (22s), qui s'étend dans un plan de fente (1-b) et présente dans une direction d'épaisseur (d), qui est perpendiculaire au plan de fente (1-b), une hauteur (s), la hauteur d'un roving sec (33; R1, R2, ...) dans la direction d'épaisseur (d) plus une petite métré, qui est sélectionnée de sorte qu'une pression d'imprégnation est générée pour presser le milieu dans le roving.

2. Tête à déposer selon la revendication 1, dans laquelle la buse (22, 22i, 22j) est agencée dans la direction d'avance (V) en aval du dispositif de transport de fibres (20f).

3. Tête à déposer selon la revendication 1 ou 2, dans laquelle la buse (22, 22i, 22j) est agencée dans la direction d'avance (V). en amont du dispositif de coupe de fibres (21, 21i, 21j).

4. Tête à déposer selon l'une quelconque des revendications 1 à 3, dans laquelle
les rovings (33 ; R1, R2, ...) sont guidés dans la buse (22) par le biais d'une voie de guidage (22b).

5. Tête à déposer selon l'une quelconque des revendications 1 à 4, dans laquelle
la buse (22, 22i, 22j) présente pour chaque roving de la pluralité de rovings (33 ; R1, R2, ...), un interstice de passage en forme de fente (22s).

6. Tête à déposer selon l'une quelconque des revendications 1 à 5, dans laquelle
un rouleau presseur (20r) est agencé à la sortie (20a).

7. Tête à déposer selon l'une quelconque des revendications 1 à 6, dans laquelle
un dispositif de chauffage (25, 25i1, 25i2, 25j1, 25j2) est agencé dans la direction d'avance (V) en aval du dispositif de coupe de fibres (21, 21i, 21j).

8. Tête à déposer selon l'une quelconque des revendications 1 à 7, dans laquelle
un dispositif de refroidissement (23, 23i, 23j) est agencé dans la direction d'avance (V) en aval de la buse (22, 22i, 22j) et en amont du dispositif de coupe de fibres (21, 21i, 21j).

9. Tête à déposer selon l'une quelconque des revendications 1 à 8, dans laquelle
un dispositif de transport intermédiaire (24, 24i, 24j) est agencé dans la direction d'avance (V) en aval de la buse (22, 22i, 22j).

10. Tête à déposer selon l'une quelconque des revendications 1 à 9, dans laquelle la buse (22, 22i, 22j) est adaptée pour l'application et l'introduction bilatérales du milieu sur/dans les rovings.

11. Tête à déposer selon l'une quelconque des revendications 7 à 10, dans laquelle
le dispositif de chauffage présente un chauffage final (25i1, 25j1) pour le réchauffage du milieu, qui est appliqué sur les rovings (33 ; R1, R2, ...) et introduit dans les rovings, qui est agencé dans la direction d'avance (V) en amont et au voisinage du rouleau presseur (20r).

12. Tête à déposer selon l'une quelconque des revendications 1 à 11, dans laquelle
une pluralité de voies d'avance (P1, P2) est prévue pour la pluralité de rovings secs (33), qui sont introduits par l'entrée (20e), de sorte que les rovings secs sont répartis en groupes (Ri, Rj) et pour chacun des groupes, qui sont amenés à la sortie (20a) par le biais de voies d'avance séparées (P1, P2), respectivement une buse correspondante (22i ,22j), un dispositif de coupe (21i, 21j) et en option un dispositif de refroidissement (23i, 23j) correspondant, un dispositif de transport intermédiaire (24i, 24j) ou un dispositif de chauffage (25i1, 25i2, 25j1, 25j2) sont prévus.

13. Tête à déposer selon l'une quelconque des revendications 1 à 12, dans laquelle
la buse (22, 22i, 22j) est adaptée, un milieu, qui est sélectionné parmi un adhésif pour fixer les rovings, un liant pour relier les rovings, et une résine pour imprégner le roving est adapté.

14. Dispositif d'élaboration d'une ébauche (31) pour un élément structural à partir d'un matériau composite renforcé par des fibres, avec
un porte-pièce (40),
une tête à déposer (20) selon l'une quelconque des revendications 1 à 13 pour le dépôt d'un ensemble de fibres (30) en rovings (33) sur le porte-pièce (40), et
un dispositif de transfert pour le transfert de l'ébauche (31) du porte-pièce (40) à une prochaine étape de fabrication.
